# FASCICULE DE BREVET EUROPEEN

(11) **EP 1 214 686 B1**
(45) Date de publication et mention de la délivrance du brevet: **16.06.2004**
(21) Numéro de dépôt: 00960785.4
(22) Date de dépôt: 04.09.2000
(51) Int. Cl.: G06K 19/077

(54) **DISPOSITIF ELECTRONIQUE PORTATIF AVEC AFFICHEUR ET MOYENS DE CHARGEMENT DE MESSAGES POUR CE DERNIER**
TRAGBARES ELEKTRONISCHES GERÄT MIT EINER ANZEIGEVORRICHTUNG UND MITTEL ZUM LADEN VON NACHRICHTEN DAFÜR
PORTABLE ELECTRONIC DEVICE WITH DISPLAY UNIT AND MEANS FOR LOADING MESSAGES FOR THE LATTER

(30) Priorité: 06.09.1999 FR 9911136
(43) Date de publication de la demande: 19.06.2002
(73) Titulaire: Gemplus, 13881 Gémenos Cedex (FR)
(72) Inventeur: COOREMAN, Pascal, F-13008 Marseille (FR)
(86) Numéro de dépôt international: PCT/FR2000/002431
(87) Numéro de publication internationale: WO 2001/018747

(56) Documents cités:
- PATENT ABSTRACTS OF JAPAN vol. 1996, no. 09, 30 septembre 1996 (1996-09-30) & JP 08 129699 A (OMRON CORP), 21 mai 1996 (1996-05-21)
- PATENT ABSTRACTS OF JAPAN vol. 1999, no. 01, 29 janvier 1999 (1999-01-29) & JP 10 271189 A (SHARP CORP), 9 octobre 1998 (1998-10-09)
- PATENT ABSTRACTS OF JAPAN vol. 1998, no. 14, 31 décembre 1998 (1998-12-31) & JP 10 257135 A (SHARP CORP), 25 septembre 1998 (1998-09-25)
- PATENT ABSTRACTS OF JAPAN vol. 1998, no. 05, 30 avril 1998 (1998-04-30) & JP 10 013887 A (MATSUSHITA ELECTRIC IND CO LTD), 16 janvier 1998 (1998-01-16)
- PATENT ABSTRACTS OF JAPAN vol. 1998, no. 04, 31 mars 1998 (1998-03-31) & JP 09 325795 A (CASIO COMPUT CO LTD), 16 décembre 1997 (1997-12-16)

## Description

L'invention concerne les dispositifs. électroniques portatifs, de type cartes à puce, dotés de moyens d'affichage. De tels dispositifs sont connus des documents GB-A-2 066 540 et GB-A-2 067 467 qui décrivent une carte à puce au format d'une carte de crédit normalisée intégrant un afficheur alphanumérique à cristaux liquides. L'afficheur permet de présenter des informations stockées dans la puce associée à la carte, par exemple des informations concernant l'état d'un compte.

Ces informations proviennent soit directement, soit indirectement, d'un lecteur de carte classique à contacts. Ce type de lecteur interagit avec la carte à puce par un contact ohmique entré des contacts associés respectivement au lecteur et à la carte. Autrement dit, il est nécessaire au détenteur de la carte d'insérer celle-ci physiquement dans le lecteur afin d'obtenir des informations de source extérieure pouvant être lues sur l'afficheur.

L'intérêt des cartes à afficheur intégré demeure limité, notamment du fait que l'utilisateur doit aller chercher les informations auprès d'un lecteur avant de pouvoir en bénéficier. De fait, il ne peut disposer d'informations pertinentes automatiquement et au fur et à mesure qu'elles sont émises à partir d'une source de données.

Aussi, l'objet de l'invention est de prévoir un dispositif électronique portatif, de type carte à puce, permettant de recevoir et d'afficher des informations provenant d'une source sans qu'il soit necessaire de placer le dispositif en contact physique avec cette dernière.

A cette fin, l'invention est définie dans les revendications; le préambule de la revendication 1 reprend l'enseignement du document JP08012699.

Ce document JP080129699 propose de permettre aux passagers en attente de prendre sans à-coup un autobus grâce à des informations collectées et à la confirmation d'un d'arrêt de cet autobus qu'un passager est à proximité de l'entrées. Quand un autobus atteint l'arrêt, les passagers à proximité sont informés et leur admission à bord fait l'objet d'une vérification et le cas échéant d'une confirmation. A cette fin le passager attendant l'autobus porte une carte sans contact. Quand l'autobus est proche ou arrivé, une communication est effectuée vers chaque carte. Sur la base de, l'information de carte, sont collationnées des informations sur la destination et les points de passage, pour définir les arrêts de l'autobus, notamment en fonction de destinations différentes pour chaque passager. Des moyens dé coïncidence et une latence de temps sont employés efficacement lors de la collation des informations, pour fluidifier l'application.

Le document JP100271189A propose de permettre à un téléphone portatif d'émettre un avis d'appel entrant par le truchement d'une tonalité et d'un vibrateur. Quand un appel entrant est détecté hors mode de réponse automatique, une section de contrôle principale fournit des données de tonalité à une section de CODEC, puis permet à une sonnerie de bourdonner ou au vibreur de commencer à vibrer. L'appel entrant permet aussi à une section d'affichage de visualiser le message indicateur d'un appel entrant. Quand l'utilisateur applique une pression au corps, un détecteur de pression interromps la transmission de données afin d'arrêter la sonnerie ou arrêter le vibreur.

Le document WO9809257 décrit un système permettant de charger une mini-application et ses droits d'utilisation associes sur une carte a puce contenant d'autres mini-applications avec des droits d'utilisation associés, dont les valeurs se modifient quand l'application est utilisée. Le système comporte une carte a puce contenant une seconde application ayant des droits d'utilisation, et pouvant être connectée au système mêmoire à distance. En fonction de droits d'utilisation, le système permet de charger dans la carte à puce une application à partir d'un lieu éloigné, par l'intermédiaire d'une interface, et de mettre en mémoire cette application dans la carte. Des modifications des droits d'utilisation des applications sont permises, par exemple afin de reconstituer des droits d'utilisation.

Le document JP10013887 décrit un processeur qui extrait une série de chiffre d'un message de radio messagerie (pager) qui a été reçu par un téléphone via une antenne, en récupérant dans un signal un numéro de téléphone inclus dans ce message, depuis une mémoire formant annuaire incorporé au téléphone. Le numéro de téléphone retrouvé est montré sur un écran de visualisation du téléphone.

L'invention trouve de nombreuses applications, dont l'affichage:
- de messages publicitaires
- d'informations sur le trafic (par exemple dans le métro)
- d'informations relatives au porteur (ex: porte d'embarquement / transport aérien...
- etc...

Ainsi, la présente invention constitue un nouveau media de communication permettant la diffusion de messages spécifiques à un porteur donné, ces messages étant affichés sur la carte à puce.

D'autres avantages et caractéristiques de l'invention apparaîtront plus clairement à la lecture d'un mode de réalisation préféré, donné purement à titre d'exemple non-limitatif, par référence aux dessins annexés dans lesquels :
- la figure 1 est un schéma de principe d'un dispositif portatif électronique conforme à la présente invention ;
- la figure 2 est un schéma bloc du module électronique logé dans la carte de la figure 1 ;
- la figure 3 est un schéma bloc montrant une chaîne d'échange de données entre une base de données fixe et la carte de la figure 1 ;
- la figure 4 est un organigramme d'échange de données bidirectionnel entre une base de données avec serveur et la carte de la figure 1 ; et
- la figure 5 est un organigramme d'échange de données unidirectionnel depuis une base de données avec serveur vers la carte de la figure 1.

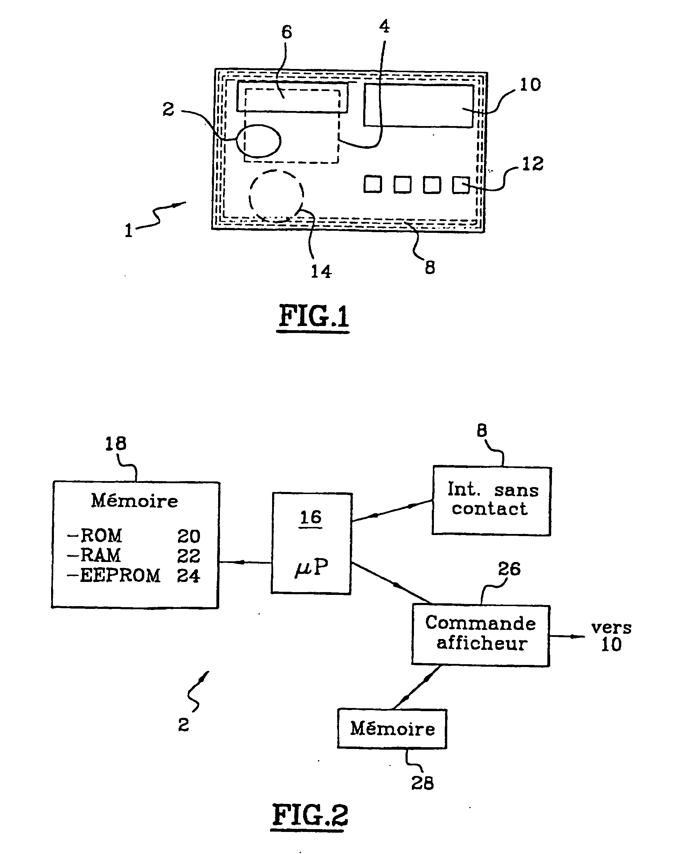

Sur l'exemple de mise en oeuvre représenté à la figure 1, le dispositif électronique portatif se présente sous forme d'une carte à puce 1 au format normalisé de 85 mm en longueur, de 54 mm en largeur et de 0,76 mm en épaisseur, conformément à la norme ISO 7816. / La carte peut éventuellement avoir des dimensions supérieures pour permettre d'intégrer plus facilement l'ensemble de ses composants.

L'ensemble des moyens fonctionnels intégrés à la carte 1 comprend :
- un module électronique 2 qui est basé sur un microprocesseur et des circuits électroniques périphériques ainsi qu'il sera décrit plus loin ;
- une batterie 4 pouvant être du type remplaçable ou rechargeable ;
- éventuellement une cellule solaire 6 servant de source d'énergie auxiliaire vis-à-vis de la batterie 4, la cellule pouvant en outre servir à recharger cette dernière ;
- une interface de communication 8 basée sur une antenne permettant au module électronique 2 de recevoir et/ou de transmettre des données vis-à-vis de l'extérieur par voie hertzienne - et donc sans contact physique - avec une autre interface en dehors de la carte. L'interface de communication 8 permet de réaliser avec le module électronique 2 une carte dite "sans contact" ;
- un écran d'affichage plat 10 du type alphanumérique et/ou graphique permettant de présenter des informations à partir du module électronique 2, ces informations pouvant être des données stockées en interne dans le module ou des données reçues par l'interface de communication 8 ;
- des moyens de sélection 12, comme par exemple des boutons de commande 12 permettant de sélectionner les diverses fonctions de la carte, et notamment de naviguer sur des menus graphiques ou alphanumériques présentés sur l'écran d'affichage 10 ; et
- un dispositif avertisseur sonore 14 sous forme de mini haut-parleur ou de ronfleur permettant d'avertir l'utilisateur de la carte d'une tâche à effectuer, par exemple la lecture d'un nouveau message.

Il est également possible d'ajouter à la carte des moyens d'identification biométriques du porteur, afin d'authentifier l'utilisation de la carte. De tels moyens peuvent être constitués par un détecteur d'empreinte digital, par exemple.

Dans un mode de réalisation préféré, la carte 1 comporte également une interface de communication de type "à contact" (non représentée). Cette interface comporte un ensemble de plages de contact destinées à venir en contact ohmique avec des contacts correspondants d'un dispositif lecteur. Dans ce cas, la carte 1 est capable de fonctionner à la fois en tant que carte sans contact (par l'interface de communication 8) et en tant que carte à contacts, formant ainsi une carte multimode, également connue sous le terme anglo-saxon de carte "combicard".

Ainsi la carte 1 peut être utilisée pour les applications courantes des cartes à puce comme des transactions bancaires (paiement, crédit ou retrait d'argent), des acquisitions ou dépenses de points dans le cadre de programmes de fidélité ou bien des applications de type porte-monnaie électronique.

La figure 2 montre de manière synoptique les différents blocs fonctionnels du module électronique 2. Ce module est centré sur un microprocesseur 16 qui gère l'ensemble des organes de la carte 1.

Le microprocesseur 16 échange des données d'une part avec l'interface sans contact 8 (ici représentée comme formant une partie intégrante du module électronique) et d'autre part avec un ensemble de mémorisation 18. Ce dernier comprend :
- une mémoire figée ROM 20 pour le stockage de la partie intemporelle des programmes exécutés par le microprocesseur 18. Cette mémoire 20 peut également être réalisée en technologie "Flash EPROM" ou "EEPROM", permettant de modifier le contenu du programme, par exemple lors d'une mise à jour de ce dernier ;
- une mémoire de travail RAM 22 qui est une mémoire vive permettant de stocker provisoirement des données lors de l'exécution d'un programme ou lors d'une réception de données provenant de l'interface de communication 8 ; et
- une mémoire 24 pour le stockage de données et de fichiers, réalisée en technologie EEPROM , flash EPROM (voire même RAM).

Le microprocesseur 16 communique en mode sans contact grâce à l'interface 8 et envoie les signaux adéquats sur une antenne incluse dans la carte elle-même.

Le microprocesseur 16 intègre ainsi les moyens nécessaires à l'échange de données avec l'interface de communication 8. A cette fin, cette dernière comprend en plus de l'antenne des moyens de modulation et de démodulation de signaux numériques sur une onde porteuse, généralement dans une gamme de fréquences élevée, afin respectivement de transmettre et de recevoir des données numériques.

Le microprocesseur 16 gère en outre un circuit 26 de commande de l'afficheur 10, qui comporte sa propre mémoire 28 destinée à stocker une ou plusieurs pages d'écran indépendamment de l'ensemble de mémorisation 18.

On comprendra que la décomposition des blocs fonctionnels venant d'être décrits peut se faire autrement de manière équivalente, notamment en conférant certaines ou toutes les tâches des organes périphériques au microprocesseur lui-même, selon l'architecture adoptée pour ce dernier.

Dans le cas où le circuit de commande d'afficheur 26 fait partie du microprocesseur 16, la mémoire nécessaire 28 peut être incluse dans la mémoire du microprocesseur lui-même.

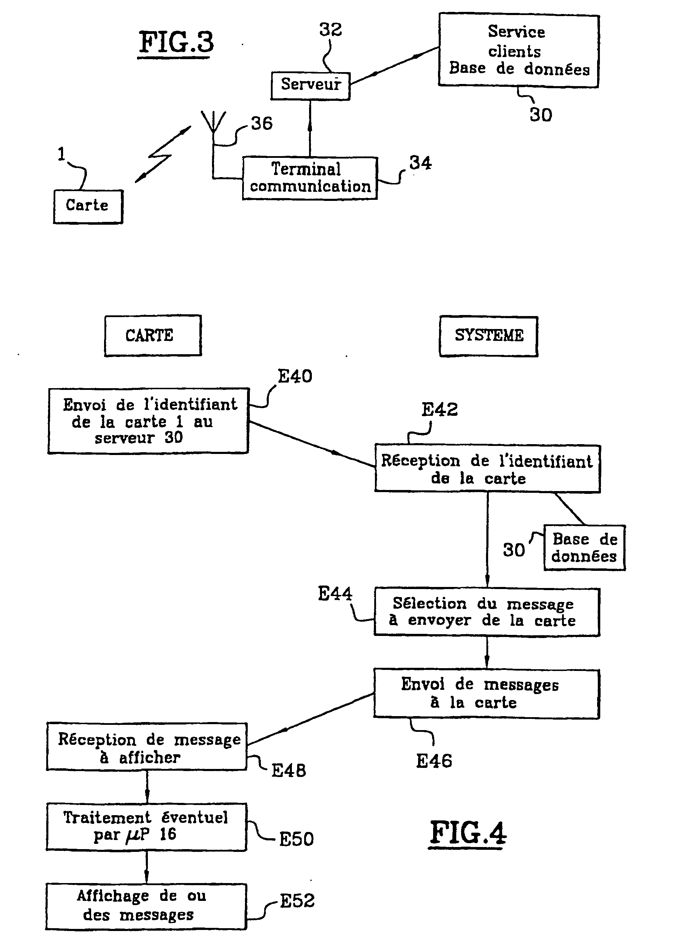

La figure 3 représente schématiquement un système de transmission et de réception de messages entre une carte 1 telle que représentée aux figures 1 et 2 et un centre de service clients 30. Ce dernier peut être constitué par un centre de gestion et de regroupement/distribution d'informations vers des clients détenteurs de cartes 1.

Le centre de service clients est lié à un serveur 32 qui constitue un maillon local dans la chaîne d'échange d'informations entre la carte et le centre. Le serveur 32 peut, par exemple, être situé dans un port d'embarquement d'un aéroport, dans une station de transport en commun ou dans un quartier dans lequel se situe le porteur de la carte considérée 1. Dans la pratique, on disposera bien entendu d'un nombre de serveurs 32 pouvant être relativement élevé, tous reliés au centre de service clients 30. La liaison entre les serveurs 32 et le centre de service de clients 30 peut être réalisée par voie hertzienne ou par ligne téléphonique, ou par tout autre moyen.

A chaque serveur 32 dépend un ou une pluralité de terminaux de communication 34. Chaque terminal de communication 34 comporte une interface de transmission et de réception comportant une antenne 36 et permet de dialoguer avec au moins une carte 1. Typiquement, on placera un terminal de communication 34 à un lieu de passage de porteurs de cartes 1, par exemple aux entrées de portes d'embarquement d'un aéroport, aux portillons d'un accès à un service de transport en commun, etc.

Le terminal de communication 34 comporte une antenne 36 grâce à laquelle il peut échanger des informations avec l'interface de communication sans contact 8 de la carte 1. Il est ainsi constitué une chaîne d'informations entre le centre de service de clients 30 et chaque carte 1 dans la zone de capture d'un terminal de communication 34.

Il sera maintenant décrit un exemple de mise en oeuvre d'une carte 1 par un utilisateur dans un système de communication tel que représenté à la figure 3.

On notera tout d'abord que la carte 1 sera généralement de nature multi-applicative, c'est-à-dire que plusieurs applications seront accessibles au porteur. Ce dernier pourra choisir l'application à utiliser grâce à une sélection au clavier 12 en suivant les indications de l'afficheur 10. L'application pourra également être automatiquement sélectionnée par un terminal de communication 34 en cas d'insertion de la carte ou par l'intermédiaire d'une communication à distance sans contact.

Dans l'exemple, qui sera décrit par référence à l'organigramme de la figure 4, l'utilisateur de la carte 1 porte cette dernière dans un portefeuille.

Dès son accès dans l'aéroport, l'utilisateur est détecté par une borne 34. S'il est reconnu, on lui indique un guichet pour retirer son billet ou pour procéder à son enregistrement.

Ensuite, on lui indique l'heure et la porte d'embarquement, et l'existence d'un retard éventuel. A proximité de la porte d'embarquement, on lui indiquera quand il doit se présenter en fonction du siège qui lui a été attribué.

Dans l'avion, on peut permettre au porteur de choisir son menu, de consulter les programmes de télévision, de radio et le catalogue de vente des objets hors-taxes. On peut le renseigner sur les conditions météorologiques à l'arrivée et sur une éventuelle correspondance.

A l'arrivée, le porteur est dirigé vers le moyen de transport qu'il choisit (train, taxi) ou automatiquement vers le guichet du loueur de voiture auprès duquel il a effectué une réservation.

Ainsi, à l'entrée de la porte d'embarquement d'un aéroport se trouve une antenne 36 connectée à un système service clients 30 gérant une base de données. Lorsque l'utilisateur avec la carte 1 pénètre à travers la porte d'embarquement, il entre dans le champ de l'antenne 36. A ce stade, la carte 1 envoie un identifiant qui permet au serveur connecté à l'antenne 36 de la reconnaître (étape E40).

Le serveur 32 reçoit ces informations (étape E42) et, grâce à sa base de données, décide ensuite du message à renvoyer à la carte 1 (étape E44) en fonction d'informations contenues dans la base de données et/ou en fonction de données transmises par la carte, telles que le profil, le numéro de vol, billet de transport...

Ce message est transmis (étape E46) depuis l'antenne 36 du terminal de communication 34 et est reçu sans contact par la carte (étape E48). Optionnellement, la carte 1 signale la réception de ce message par un bip émis par le haut-parleur 14 (figure 1).

Après un traitement éventuel par le microprocesseur 16 de la carte 1 (étape E50), ce message est présenté sur l'afficheur 10 (étape E52). En cas de pluralité de messages ou en cas de longueur du message supérieure à la taille de l'afficheur, l'utilisateur pourra faire défiler les caractères grâce aux touches du clavier 12. En variante, les messages défileront automatiquement sur l'afficheur.

Ce système permet d'envoyer précisément des messages donnés à un consommateur particulier.

On remarque que ce système nécessite un échange bidirectionnel entre la carte et le système fixe via l'antenne. Ceci peut poser les problèmes suivants :
- le temps de transaction peut être trop long du fait du traitement par le système central. En effet, l'échange doit se faire pendant que la carte 1 est dans le champ de l'antenne 36. Ceci peut donc constituer une limitation d'usage de la carte 1 ;
- il devient nécessaire d'instaurer un dialogue avec une carte en particulier. Du fait de la notion de dialogue entre la carte et le système central, il est nécessaire d'instaurer un "canal" de communication. Il faut donc gérer un mécanisme de type anti-collision pour permettre le dialogue avec une carte donnée alors que plusieurs cartes sont dans le champ de l'antenne.
- la distance de fonctionnement est limitée : la carte 1 ayant une antenne 8 et une énergie plus réduites que le système fixe, la portée de communication est largement supérieure dans le sens antenne fixe 36 --> carte que dans le sens inverse.

Il peut donc être intéressant de modifier la procédure d'échange de la figure 4 pour ne conserver qu'un seul sens d'envoi de données, à savoir de l'antenne fixe 36 vers la carte 1.

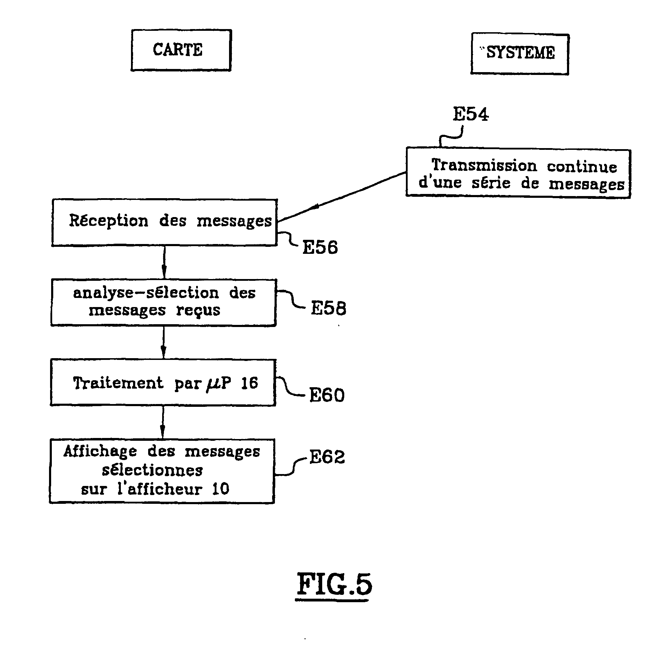

La figure 5 représente un organigramme d'un exemple d'une telle transmission unidirectionnelle du système vers la carte 1 dans la même application que décrite par référence à la figure 4.

Dans ce cas, le système envoie via l'antenne 36 du terminal de communication 34 un ensemble de messages identiques captés par toutes les cartes présentes dans le champ de l'antenne 36 (étape E54).

La carte 1 reçoit systématiquement tous ces messages (étape E56) et effectue une analyse visant à sélectionner le ou les messages qui la concerne(nt) et n'enregistrer dans sa mémoire que ces messages (étape E58). Après un traitement par le microprocesseur 16 (étape E60), ce ou ces messages est/sont ensuite affiché(s) (étape E62).

Il peut être ainsi possible de maximiser la distance de fonctionnement du système. En effet, la carte 1 a une capacité d'émission relativement faible alors que l'antenne fixe aura elle une taille lui permettant une émission à une portée bien supérieure. Ainsi, en limite du champ, la carte pourra bien recevoir les messages alors que réciproquement, les messages émis par la carte auront des difficultés à être correctement reçus par le serveur.

La carte peut être rangée à l'intérieur d'un portefeuille, d'un sac... Il peut donc être nécessaire d'envoyer un signal sonore pour avertir le porteur de la réception d'un message. Pour cela, il est possible d'utiliser le haut-parleur 14 ou le ronfleur (programmé pour émettre des bips). D'autres moyens pourraient éventuellement être utilisés: effets lumineux, vibreur, impulsions électriques...

D'autre part, afin d'éviter un éventuel encombrement au niveau de l'antenne 36 (souvent le cas à l'entrée d'une porte d'embarquement d'un aéroport), il est possible d'ajouter une temporisation qui déclenchera l'émission de la sonnerie et l'affichage du message seulement quelques secondes ou minutes après ladite réception. La durée de cette temporisation peut être fixe ou paramétrable, lors de l'émission de la carte ou par l'utilisateur. Cette durée peut aussi éventuellement être transmise par le système avec le message lui-même.

Pour des raisons de discrétion, on peut également donner la possibilité au porteur de désactiver cette fonction d'avertissement sonore.

Le système permet de nombreuses variantes tout en restant dans le cadre de la présente invention. Ainsi, à titre d'exemple :
- les données transmises peuvent être en fait utilisées par la carte lors de l'exécution de logiciel présent dans la carte. La carte affiche alors le résultat de l'exécution sur son afficheur ;
- les données transmises par l'intermédiaire de l'antenne peuvent constituer en fait la mise à jour d'applications existant dans la carte ou de nouvelles applications qui seront chargées automatiquement sur la carte. L'affichage sur l'écran 10 est donc une information au porteur de la mise à jour de sa carte 1 ainsi éventuellement que la demande pour la saisie de données propres à cette nouvelle application.

## Revendications

1. Dispositif électronique portatif, de type carte à puce (1), permettant de recevoir et d'afficher des informations provenant d'une source extérieure, comportant une interface de communication (8) du type sans contact et des moyens pour présenter sur l'afficheur (10) des informations en fonction des données recues à partir de cette interface sans contact **caractérisé en ce qu'**il comporte des moyens (12) pour sélectionner, à partir d'une pluralité de messages reçus par ladite interface de communication sans contact (8), le ou les message(s) à afficher en fonction d'un logiciel et de données incluses dans ledit dispositif.

2. Dispositif selon la revendication 1,
**caractérisé en ce qu'**il comprend des moyens (16) pour transmettre par ladite interface de communication sans contact (8) des données vers une source d'informations (30-36) permettant à cette dernière d'émettre en retour au moins un message à présenter sur l'afficheur (10).

3. Dispositif selon l'une quelconque des revendications 1 ou 2, **caractérisé en ce qu'**il comporte des moyens avertisseurs (14) pour indiquer la présence d'un massage reçu et/ou présenté sur l'afficheur (10).

4. Dispositif selon la revendication 3,
**caractérisé en ce qu'**il comporte des moyens de temporisation coopérant avec lesdits moyens avertisseurs (14) afin que ces derniers indiquent la présence d'un message seulement après un laps de temps prédéterminé suivant une réception dudit message et/ou de son affichage.

5. Dispositif selon la revendication 4,
**caractérisé en ce que** ledit laps de temps est paramétrable par des commandes réalisées au sein du dispositif (1).

6. Dispositif selon la revendication 4,
**caractérisé en ce que** ledit laps de temps est paramétrable par des données contenues dans au moins message reçu par ladite interface de communication (8).

7. Dispositif selon l'une quelconque des revendications 3 à 6, **caractérisé en ce que** lesdits moyens avertisseurs (14) peuvent être désactivés par une commande transmise à partir du dispositif (1) ou reçue par ladite interface de communication (8).

8. Dispositif selon l'une quelconque des revendications 1 à 7, **caractérisé en ce qu'**il comprend une mémoire (18) de stockage d'un programme et **en ce qu'**il comprend des moyens (16) pour exécuter ledit programme en fonction de données reçues par l'interface sans contact (8), le résultat de l'exécution dudit programme étant présenté sur l'afficheur (10).

9. Dispositif selon l'une quelconque des revendications 1 à 8, **caractérisé en ce qu'**il comprend une mémoire (18) de stockage d'au moins une application modifiable par mise à jour de données reçues par l'interface de communication sans contact (8) et des moyens (16) pour faire afficher la bonne mise à jour de la ou les application(s).

10. Dispositif selon l'une quelconque des revendications 1 à 9, **caractérisé en ce qu'**il comprend des moyens pour recevoir et stocker via l'interface de communication sans contact (8) au moins une nouvelle application, et des moyens (16) pour faire afficher la bonne installation de ladite nouvelle installation.

## Claims

1. Portable electronic device, of the chip card (1) type, that makes it possible to receive and display information coming from an external source, said device comprising a communication interface (8) of the contactless type and means for showing on the display (10) information as a function of the data received from this contactless interface, **characterized in that** it comprises means (12) for selecting, from a number of messages received by said contactless communication interface (8), the message or messages to be displayed as a function of software and data included in said device.

2. Device according to Claim 1, **characterized in that** it comprises means (16) for transmitting, via said contactless communication interface (8), data to an information source (30-36) making it possible for the latter to transmit in return at least one message to be shown on the display (10).

3. Device according to either of Claims 1 and 2, **characterized in that** it comprises alert means (14) for indicating the presence of a message received and/or shown on the display (10).

4. Device according to Claim 3, **characterized in that** it comprises timing means which cooperate with said alert means (14) so that the latter indicate the presence of a message only after a predetermined time interval following receipt of said message and/or display thereof.

5. Device according to Claim 4, **characterized in that** said time interval can be parameterized by commands executed within the device (1).

6. Device according to Claim 4, **characterized in that** said time interval can be parameterized by data contained in at least one message received by said communication interface (8).

7. Device according to any one of Claims 3 to 6, **characterized in that** said alert means (14) may be deactivated by a command transmitted from the device (1) or received by said communication interface (8).

8. Device according to any one of Claims 1 to 7, **characterized in that** it comprises a memory (18) for storing a program and **in that** it comprises means (16) for executing said program as a function of data received by the contactless interface (8), the result of the execution of said program being shown on the display (10).

9. Device according to any one of Claims 1 to 8, **characterized in that** it comprises a memory (18) for storing at least one application that can be modified by updating data received by the contactless communication interface (8) and means (16) for displaying correct updating of the application or applications.

10. Device according:to any one of Claims 1 to 9, **characterized in that** it comprises means for receiving and storing via the contactless communication interface (8) at least one new application and means (16) for displaying correct installation of said new application.

## Patentansprüche

1. Den Empfang und das Anzeigen von aus einer externen Quelle stammenden Informationen erlaubende tragbare elektronische Vorrichtung vom Typ Chipkarte (1) mit einer Kommunikationsschnittstelle (8) vom Typ ohne Kontakt und Mitteln zum Anzeigen von Informationen auf der Anzeige (10) in Abhängigkeit der ausgehend von dieser Schnittstelle ohne Kontakt empfangenen Daten, **dadurch gekennzeichnet, dass** sie, Mittel (12) zum Auswählen der in Abhängigkeit einer Software und in der genannten Vorrichtung enthaltenen Daten anzuzeigenden Meldung(en) aus einer vielzahl von durch die genannten Schnittstelle ohne Kontakt (8) empfangenen Meldungen umfasst.

2. Vorrichtung gemäß Anspruch 1, **dadurch gekennzeichnet, dass** sie Mittel (16) zum Übertragen von Daten durch die genannte Kommunikationsschnittstelle ohne Kontakt (8) auf eine Informationsquelle (30 - 36) umfasst, die dieser wenigstens die Angabe einer auf der Anzeige (10) anzuzeigenden Rückmeldung ermöglicht.

3. Vorrichtung gemäß Anspruch 1 oder 2, **dadurch gekennzeichnet, dass** sie Meldemittel (14) zur Anzeige des Vorhandenseins einer empfangenen und / oder auf der Anzeige (10) angezeigten Meldung umfasst.

4. Vorrichtung gemäß Anspruch 3, **dadurch gekennzeichnet, dass** sie mit den genannten Meldemitteln (14) zusammenarbeitende Verzögerungsmittel umfasst, damit diese das Vorhandensein einer Meldung erst nach einer vorbestimmten Zeitspanne gemäß einem Empfang der genannten Meldung und / oder ihrer Anzeige anzeigen.

5. Vorrichtung gemäß Anspruch 4, **dadurch gekennzeichnet, dass** die genannte Zeitspanne durch innerhalb der Vorrichtung (1) realisierte Steuerungen parametrierbar ist.

6. Vorrichtung gemäß Anspruch 4, **dadurch gekennzeichnet, dass** die genannte Zeitspanne durch in wenigstens durch die genannte Kommunikationsschnittstelle (8) einer empfangenen Meldung enthaltene Daten parametrierbar ist.

7. Vorrichtung gemäß Anspruch 3 bis 6, **dadurch gekennzeichnet, dass** die genannten Meldemittel (14) durch eine ausgehend von der Vorrichtung (1) übertragene oder durch die genannte Kommunikationsschnittstelle (8) empfangene Steuerung deaktiviert werden können.

8. Vorrichtung gemäß Anspruch 1 bis 7, **dadurch gekennzeichnet, dass** sie einen Speicher (18) zum Speichern eines Programms umfasst und dass sie Mittel (16) zum Ausführen des genannten Programms in Abhängigkeit der durch die Schnittstelle ohne Kontakt (8) empfangenen Daten umfasst, wobei das Ergebnis der Ausführung des genannten Programms auf der Anzeige (10) angezeigt wird.

9. Vorrichtung gemäß Anspruch 1 bis 8, **dadurch gekennzeichnet, dass** sie einen Speicher (18) zum Speichern wenigstens einer durch Aktualisierung der durch die Kommunikationsschnittstelle ohne Kontakt (8) empfangenen modifizierbaren Anwendung und Mittel (16) zur Anzeige der korrekten Aktualisierung der Anwendung(en) umfasst.

10. Vorrichtung gemäß Anspruch 1 bis 9, **dadurch gekennzeichnet, dass** sie Mittel zum Empfang und zur Speicherung über die Kommunikationsschnittstelle ohne Kontakt (8) von wenigstens einer neuen Anwendung und Mittel (16) zum Anzeigen der korrekten Installation der genannten neuen Anwendung umfasst.
